# DEMANDE DE BREVET EUROPEEN

(11) **EP 1 942 415 A1**
(43) Date de publication de la demande: **09.07.2008**
(21) Numéro de dépôt: 07291597.8
(22) Date de dépôt: 21.12.2007
(51) Int. Cl.: G06F 11/30

(54) **Système et procédé de détermination des performances d'un réseau d'interconnexions sur puce.**

(30) Priorité: 27.12.2006 FR 0655979
(71) Demandeur: ARTERIS, 78280 Guyancourt (FR)
(72) Inventeur: Boucard, Philippe, 78150 Le Chesnay (FR); Fawaz, Alain, 78280 Guyancourt (FR)
(74) Mandataire: Delprat, Olivier

(57) **Abrégé**

Ce système de détermination des performances d'un réseau d'interconnexion de blocs fonctionnels d'un circuit intégré spécialisé comporte un ensemble de modules de sondage (M1, M2, M3) disposés sur le réseau et comprenant des moyens pour détecter un évènement sur au moins un lien de communication (L1, L2,..., LN) du réseau et des moyens pour élaborer une caractéristique traduisant l'activité dudit au moins un lien à partir de la détection dudit évènement.

## Description

L'invention concerne les circuits intégrés spécialisés et, plus particulièrement, la détection des performances d'un réseau d'interconnexion d'un tel circuit intégré spécialisé.

De tels circuits, généralement désignés par l'homme du métier par le terme « NoC » (Network on-chip, en anglais) comportent un ensemble de blocs fonctionnels assurant chacun l'exécution d'une ou de plusieurs fonctions élémentaires intégrés sur le circuit et reliés entre eux par un réseau d'interconnexions, généralement désigné par les anglo-saxons par le terme de « On-chip Interconnect Network »).

Le réseau d'interconnexion se charge ainsi de faire communiquer les blocs fonctionnels même lorsqu'ils sont intégrés dans des domaines d'horloge différents du circuit intégré ou lorsqu'ils utilisent des protocoles différents, grâce à un protocole commun de transport de messages.

A la conception, il est nécessaire d'estimer les besoins en communication du réseau d'interconnexion entre les différents blocs fonctionnels afin de définir une architecture réseau ayant le meilleur compromis entre une performance élevée et un coût faible, et qui réponde à ces besoins en communication. Cette estimation est généralement effectuée en construisant des modèles de trafic pour chaque bloc fonctionnel. On construit ensuite des modèles plus proches de l'implémentation physique afin de simuler à chaque cycle d'horloge le comportement du circuit en fonction des trafics représentatifs d'une application considérée.

Cette validation, qui consiste à élaborer un modèle de trafic à partir d'une estimation des besoins en communication entre les blocs fonctionnels, présente un certain nombre d'inconvénients.

Tour d'abord, elle est limitée par le temps de simulation qui doit nécessairement rester raisonnable. En outre, le comportement du logiciel mettant en oeuvre l'application n'est pas toujours aisément modélisable. Enfin un autre inconvénient est lié à la vitesse limitée des outils utilisés pour mettre en oeuvre la modélisation du trafic.

Il existe donc un besoin pour disposer d'un système de détermination des performances d'un réseau d'interconnexion de blocs fonctionnels d'un circuit NoC qui puisse analyser en temps réel les performances d'un circuit mettant en oeuvre une application logicielle, d'un coût relativement faible et qui ne perturbe pas les performances et le bon fonctionnement du circuit intégré NoC.

L'invention a donc pour objet, selon un premier aspect, un système de détermination des performances d'un réseau d'interconnexion de blocs fonctionnels d'un circuit intégré spécialisé.

Selon une caractéristique générale de l'invention, ce système comporte un ensemble de modules de sondage disposés sur le réseau et comprenant au moins une unité de sondage comprenant des moyens pour détecter un évènement sur au moins un lien de communication du réseau et des moyens pour élaborer une caractéristique traduisant l'activité dudit au moins un lien à partir de la détection dudit évènement.

Ainsi, en prévoyant simplement des modules de sondage sur des liens de communication, il est possible d'assurer la détection d'évènements prédéterminés qui servent alors à déterminer les performances du réseau surveillé.

Par exemple, le paramètre détecté par les modules de sondage peut être constitué par la bande passante du lien surveillé, le nombre de paquets transmis, la taille du signal utile. Toutefois, tout autre paramètre, traduisant l'activité du réseau d'interconnexion, peut également être surveillé.

Selon une autre caractéristique de l'invention, les moyens pour élaborer ladite caractéristique comprennent des moyens de comptage pour compter le nombre d'évènements détectés.

Ils peuvent également être adaptés pour compter un nombre de cycles d'horloge entre deux évènements détectés.

Selon encore une autre caractéristique de l'invention, les modules de sondage sont disposés sous la forme d'une chaîne de modules ordonnés, des messages de contrôle du fonctionnement du système étant transmis aux unités de sondage sous la forme de trames de mots dont la position, dans la trame, correspond à la position, dans la chaîne, de ladite unité de sondage auquel chaque mot est destiné.

Ainsi, par exemple, chaque module de sondage comporte un compteur pour décompter les mots successivement reçus pour déterminer le destinataire desdits mots.

De préférence, chaque module de sondage comporte des moyens de décodage pour le décodage d'un premier mot de la trame indiquant le type d'informations contenues dans la trame.

Dans un mode de réalisation de l'invention, le système comporte en outre un module de contrôle comprenant des compteurs globaux vers lesquels sont transférées des valeurs de comptage des moyens de comptage.

De préférence, le module de contrôle comporte un ou plusieurs registres de configuration servant à indiquer la chaîne de modules et la position, dans ladite chaîne, de l'unité de sondage dont proviennent les valeurs de comptage.

Dans un mode de réalisation, chaque unité de sondage comporte un registre de configuration commandant un sélecteur pour la sélection d'un lien de communication parmi une pluralité de liens auxquels il est raccordé et la sélection d'un évènement détecté, et un module de détection assurant la détection sur ledit lien de l'évènement sélectionné.

Avantageusement, les unités de sondage sont chacune prévues sur une interface d'un bloc fonctionnel du circuit intégré spécialisé.

En outre, lorsque les modules de sondage sont disposés dans des parties du réseau cadencées selon des horloges différentes, le système peut comporter des moyens de mémorisation asynchrones de type FIFO assurant une adaptation des flux de données véhiculées entre les parties de réseau.

Dans un mode de réalisation, on prévoit en outre des moyens de marquage des paquets de données véhiculées entre un bloc fonctionnel initiateur d'un message vers un bloc cible et entre un bloc cible et un bloc initiateur.

Le système peut en outre comporter des moyens de détection de latence à partir d'une détection de paquets de mots marqués véhiculés sur un lien de requête entre un bloc initiateur et un bloc cible et d'une détection de paquets de mots marqués émis, en réponse, sur un lien de réponse entre ledit bloc cible et ledit bloc initiateur.

Par exemple, les moyens de détection de latence comprennent une première unité de sondage d'un module, comprenant des moyens de comptage qui sont dédiés au comptage de cycles d'horloge et qui sont démarrés après détection d'un paquet marqué dans une trame émise par le bloc initiateur vers le bloc cible et arrêtés après une détection d'un paquet marqué dans une trame reçue par le bloc initiateur en provenance du bloc cible et une deuxième unité de sondage dudit module dédiée au comptage de paquets de données marqués transmis.

Dans un mode de réalisation, le système comporte en outre des moyens pour transférer une partie au moins de la valeur de comptage des compteurs globaux vers une mémoire externe, et des moyens de déclenchement pour contrôler le transfert de ladite valeur de comptage

L'invention a également pour objet, selon un autre aspect un procédé de détermination des performances d'un réseau d'interconnexion de blocs fonctionnels d'un circuit intégré spécialisé, caractérisé en ce qu'il comporte les étapes de :
- détection d'un évènement sur au moins un lien de communication du réseau d'interconnexion ; et
- élaboration d'une caractéristique traduisant l'activité dudit au moins un lien à partir de la détection dudit évènement.

Dans le cadre de l'élaboration de la caractéristique traduisant l'activité du lien, on peut compter le nombre d'évènements détectés.

On peut également compter un nombre de cycles d'horloge entre deux évènements détectés.

Préalablement à la détection des évènements, on configure un ensemble de modules de sondage disposés sur des liens de communication du réseau sous la forme d'une chaîne de modules ordonnés et comprenant chacun au moins une unité de sondage, au moyen de messages de contrôle du fonctionnement du système transmis auxdites unités sous la forme de trames de mots dont la position, dans chaque trame, correspond à la position de l'unité de sondage dans la chaîne à laquelle le mot est destiné, et dont la largeur correspond à la largeur des liens de communication.

Selon une autre caractéristique de ce procédé, on émet, dans les messages de contrôle, un premier mot de codage du type d'information contenues dans le message.

Selon une autre caractéristique, lors d'un échange d'informations entre un bloc fonctionnel initiateur et un bloc fonctionnel cible, on marque des paquets de données émis par le bloc initiateur vers le bloc cible, on marque des paquets de données émis en réponse par le bloc cible vers le bloc initiateur, on compte le nombre de cycles d'horloge entre l'émission des paquets marqués par le bloc initiateur et la réception des paquets marqués émis par le bloc cible, et l'on compte le nombre de paquets marqués transmis et le nombre de cycles d'horloge pour transmettre chacun d'entre eux.

On peut en outre transférer des valeurs de comptage résultant du comptage des évènements détectés et/ou du nombre de cycles d'horloge vers des compteurs globaux.

Par exemple, on accumule des valeurs successives issues d'une ou de plusieurs unités de sondage, on retire une quantité fixe configurable à chaque cycle d'horloge cadençant un moyen de contrôle et l'on provoque le transfert des données quand la valeur accumulée dépasse une valeur de seuil configurable.

On peut également accumuler des valeurs successives issues d'une première unité de sondage, retirer une quantité fixe configurable un nombre de fois égale à une valeur issue d'une deuxième unité de sondage et générer un signal de déclenchement du transfert quand la valeur accumulée dépasse une valeur de seuil prédéterminée configurable.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 illustre l'architecture générale d'un système de détermination des performances d'un réseau d'interconnexion d'un circuit NoC conforme à l'invention ;
- la figure 2 illustre l'architecture générale d'un module de sondage utilisé dans le système de la figure 1 ; et
- la figure 3 illustre le transfert des données entre les modules de sondage lorsqu'ils sont situés dans des domaines d'horloge différents.

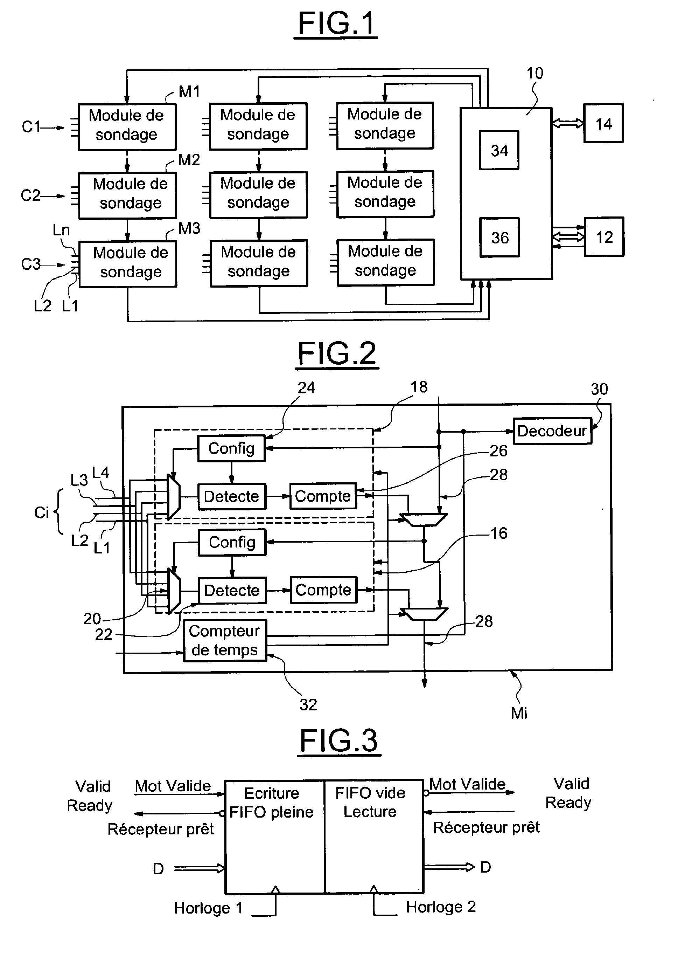

Sur la figure 1, on a représenté l'architecture générale d'un système de mesure des performances d'un réseau d'interconnexion de blocs fonctionnels d'un circuit intégré spécialisé NoC. Ce système est destiné à être intégré au réseau d'interconnexion du circuit, et, en particulier, à être disposé sur des canaux de communication, tels que C1, C2 et C3, pour surveiller le trafic de données véhiculées sur ces canaux et déterminer ainsi l'activité et les performances du circuit NoC.

En particulier, le système illustré est destiné à détecter des paramètres de fonctionnement du réseau sur un ou plusieurs liens de communication L1, L2..., LN de chaque canal entre des blocs fonctionnels utilisant par exemple des protocoles de communication différents et ayant des fréquences d'horloge différentes.

Comme on le voit, le système comporte à cet effet un ensemble de modules de sondage, tels que M1, M2 et M3 raccordés à un module de contrôle 10 assurant la configuration des modules de sondage M1, M2 et M3 et la récupération des paramètres détectés par ces modules. Chaque module de sondage est placé sur un canal de communication et surveille en parallèle les liens L1, L2... LN de ce canal, à savoir les liens de requête, sur lesquels circulent des requêtes transmises par un bloc fonctionnel initiateur, à l'initiative duquel est entamé un transfert de donnés, vers un bloc fonctionnel cible et des liens de réponse, sur lesquels circulent des réponses transmises par un bloc fonctionnel cible vers un bloc fonctionnel initiateur en réponse à une requête. Mais on pourrait également prévoir, en variante, un module de sondage assurant la surveillance des liens de requête du bloc initiateur vers le bloc cible et un module de sondage séparé assurant la surveillance des liens de requête du bloc cible vers le bloc initiateur.

On notera cependant que, de préférence, les modules de sondage sont positionnés au niveau des interfaces du réseau des blocs fonctionnels cible ou initiateur de trafic.

Comme cela sera décrit en détail par la suite, chaque module de sondage comprend une ou plusieurs unités de sondage 16, 18, ici au nombre de deux, assurant la détection des paramètres à extraire des liens.

Le module de contrôle 10 assure la configuration des unités de sondage dans les modules de sondage afin, d'une part, de sélectionner un ou plusieurs liens à observer et, d'autre part, de sélectionner le paramètre à détecter, par exemple la bande passante, le nombre de paquets circulant sur le lien, la taille des données utiles de chaque paquet transmis, .... Le module de contrôle 10 assure également la collecte des informations issues des modules de sondage et est raccordé à une interface parallèle 12 de déchargement, par exemple de type DDR (« Double Data Rate ») pour le transfert des informations de performance vers l'extérieur du système. Il est encore raccordé à une interface de configuration série 14, par exemple de type JTAG, permettant, par programmation, de configurer de l'extérieur les moyens de contrôle en vue de choisir le type d'événements à observer sur les liens de communication et de sélectionner un ou plusieurs liens de communication à observer.

On va maintenant décrire la structure de chaque module de sondage en référence à la figure 2.

Comme indiqué précédemment, chaque module de sondage Mi comporte une ou plusieurs unités de sondage 16 et 18, ici au nombre de deux, assurant la détection des paramètres à extraire des liens.

Chaque unité de sondage 16 ou 18 comporte un sélecteur 20 raccordé, en entrée, aux liens L1, L2, L3 et L4 d'un canal de communication Ci, ici au nombre de quatre, pour assurer la sélection de l'un des liens auxquels il est raccordé en vue de son observation.

Il comporte en outre un module de détection 22 raccordé au sélecteur 20 pour recevoir les données véhiculées par le lien sélectionné et détecter la ou les caractéristiques à surveiller. Un registre de configuration 24 est utilisé pour configurer le sélecteur 20 et le module de détection 22 afin, d'une part, de sélectionner l'un des liens à observer et, d'autre part, de sélectionner le paramètre à surveiller. Un compteur 26 raccordé au module de détection assure en outre le comptage des paramètres détectés.

Parmi les événements possibles susceptibles d'être détectés par le module de détection 22, on trouvera la détection de paquets, le nombre de données utiles associées à chaque paquet, la détection de l'état du lien : en cours de transfert (données valides présentes), occupé (récepteur non prêt), en attente (pas de donnée valide possible), la quantité de transfert, de liens occupés ou de liens en attente, de trous dans les paquets (données non valides dans un paquet), de messages prioritaires ou non, de types de messages (écriture, lecture), de marquage de certains paquets dédiés à la mesure de latence, ...

Lorsque l'on désire mesurer un nombre de cycles d'horloge, le module de détection 22 délivre en sortie un niveau logique permanent à « 1 » de sorte que l'on dispose d'une détection d'événements à chaque cycle d'horloge. Ceci permet d'établir toutes sortes de statistiques permettant de caractériser la qualité de fonctionnement du réseau observé. Après détection, les événements ou paramètre observés sont comptés par le compteur 26, les résultats du compteur étant ensuite transférés vers le module de contrôle 10.

On notera que toutes les unités de sondage 16 et 18 sont raccordées sous la forme d'une chaîne ordonnée formant une boucle de sorte que l'accès aux unités de sondage s'effectue de manière séquentielle et non pas par adressage. Elles sont reliées par des liens, tels que 28, qui comportent un nombre relativement faible de fils, par exemple au nombre de 8, de manière à diminuer le coût de transport des informations. Ces liens 28 sont utilisés à la fois pour configurer chaque unité, pour lire la configuration, pour récupérer la valeur des compteurs 26 ou pour démarrer, arrêter et initialiser les compteurs, en particulier par action sur les registres de configuration 24, de sorte que la taille de ces registres 24 ou la taille maximum des compteurs est limitée à la largeur des liens dans les boucles d'unités de sondage 16, 18.

Chaque module de sondage Mi comporte encore un décodeur 30 servant en particulier à décoder des informations circulant sur les liens 28 de chaque boucle reliant les unités de sondage 16, 18.

L'information circulant dans les boucles se présente en effet sous la forme de trames de messages constitués de mots, dont le nombre de bits correspond au nombre de fils de chaque lien 28. Ainsi, par exemple, chaque mot d'une trame de mots comporte 8 bits. Le premier mot est un code, destiné à être décodé par le décodeur 30, qui indique le type d'informations contenues dans le message.

Les mots suivants se rapportent respectivement aux unités de sondage qui ont la même place respective dans la chaîne que les mots dans la trame. Ainsi, par exemple, s'il s'agit d'un message de lecture des compteurs 26, le deuxième mot de la trame du message circulant dans les boucles correspond à la valeur du compteur 26 de la première unité de décodage 16 dans la boucle. S'il s'agit d'un message de configuration, les mots suivants contiennent les configurations de chacun des registres de configuration 24. Comme les moyens de configuration 14 sont généralement lents d'accès et peu souvent utilisés, on peut avoir autant de messages de configuration que d'unités de sondage dans la chaîne. On utilise alors avantageusement, dans chaque trame, un code de sélection réservé pour masquer les unités de sondage qui ne doivent pas être configurées.

Ainsi, grâce à l'accès séquentiel des unités de sondage dans les boucles, les mots destinés chacun à une unité de sondage sont ceux qui ont la même position dans la trame que l'unité de sondage dans la boucle à laquelle elle appartient.

Chaque module de sondage Mi est en outre pourvu d'un compteur 32 de temps qui assure le comptage des mots valides qui circulent dans les unités de sondage par les liens 28, ce qui permet de sélectionner le mot de la trame associé à chaque registre ou compteur de chaque unité de sondage dans un module de sondage Mi. Ce compteur 32 est initialisé au départ et est configuré suivant le nombre d'unités de sondage dans la boucle. Il est initialisé dès qu'il a compté un nombre de mots valides correspondant au nombre d'unités de sondage dans la boucle plus un.

Dans le cas d'un transfert d'informations entre une unité de sondage et les moyens de contrôle 10 (figure 1), après lecture des compteurs 26 des unités de sondage, ces compteurs sont immédiatement réinitialisés. De même, au démarrage, ces compteurs sont initialisés à « 0 ».

On notera également que des signaux additionnels sont transmis sur les liens 28 de chaque boucle, en plus des fils de données, afin, en particulier, de contrôler au mieux le flux des messages.

Ainsi, par exemple, on utilise deux signaux supplémentaires, le premier « *Valid* »indiquant que l'émetteur du message est en train d'envoyer un mot valide, le deuxième *« Ready* », dont l'information circule en sens inverse par rapport aux autres fils du lien, indiquant que le récepteur du message est prêt à recevoir un nouveau mot. Ceci permet de disposer de boucles qui traversent plusieurs domaines d'horloge différents à condition d'insérer à chaque changement de domaines d'horloge une file d'attente de type mémoire asynchrone FIFO à deux horloges.

La figure 3 montre une file d'attente asynchrone de type FIFO à deux horloges, utilisée pour passer d'un domaine d'horloge d'une horloge 1 à un autre domaine d'horloge d'une horloge 2. Dans le domaine de gauche de la figure 3 (horloge 1), tant que la mémoire FIFO n'est pas pleine, la FIFO est prête à recevoir. On peut donc écrire des données D valides. Le signal mot valide « *Valid* » sert ainsi de commande d'écriture et le signal indiquant que la mémoire FIFO n'est pas pleine sert de signal *« Ready* » pour le lien 28 entrant.

Dans le domaine de droite (horloge 2), tant que le récepteur est prêt, on peut lire de nouvelles données. Un signal *« Ready* » est ainsi émis. Le signal récepteur prêt *« Ready* » sert donc de commande de lecture. S'il y a des données D à lire (FIFO non vide) alors ces données sont valides et le signal indiquant que la mémoire FIFO n'est pas vide sert donc de signal « *Valid »* pour le lien 28 sortant. Le nombre optimum de mots dans la mémoire FIFO dépend du rapport des fréquences des deux horloges. On notera toutefois qu'il a été constaté que 5 ou 6 mots suffisent généralement. On peut donc chaîner entre elles des unités dans des domaines d'horloge différents. Cependant, on cherchera à minimiser le nombre de changements de domaine afin de conserver les coûts les plus bas possibles. Le plus courant est de disposer le module de contrôle 10 sur un domaine d'horloge qui peut être différent du domaine d'horloge de certains des modules de sondage Mi. Dans ce cas, on trouvera la mémoire FIFO asynchrone au début et à la fin de la boucle reliant ces modules de sondage.

Les données de comptage extraites des compteurs 26 de chaque unité de sondage 16, 18 sont utilisées, par les moyens de contrôle 10, pour élaborer une caractéristique qui traduit l'activité du ou de chaque lien surveillé.

Par exemple, ces informations sont utilisées pour mesurer des latences dans le réseau d'interconnexion des blocs fonctionnels. On utilise alors en outre un dispositif de marquage des paquets qui est supporté par le protocole de transport du réseau. Ce protocole permet le repérage d'un paquet de requêtes émis par un bloc fonctionnel initiateur d'une transaction jusqu'à un bloc cible et ce repérage est transmis par le bloc cible dans le paquet de réponse associé émis en retour à destination du bloc initiateur. Après avoir marqué un paquet, on mesure le temps écoulé entre son départ de l'initiateur et le retour du paquet de réponse associé.

On peut procéder à une mesure de latence en utilisant deux unités de sondage couplées.

Chaque unité de sondage détecte un évènement, la première détecte le passage d'un paquet marqué sur le lien des requêtes et la seconde le passage d'un paquet marqué sur le lien des réponses. Il convient de noter que le réseau marque les paquets de telle façon qu'il n'y ait qu'un paquet marqué à la fois sur les liens en observation. La première unité compte les cycles d'horloge en démarrant à chacun des évènements qu'elle détecte et s'arrête sur chacun des évènements détectés par la deuxième unité. Il s'agit d'une mesure sur plusieurs transferts de paquets marqués. La seconde compte les paquets marqués et, par conséquent, compte les évènements des deux unités.

Comme indiqué précédemment, la mesure de latence utilise deux unités de sondage à la fois d'un même module de sondage. La première sert à accumuler les cycles d'horloge à partir du passage d'un paquet marqué sur l'un quelconque des liens de requête d'un initiateur, jusqu'à l'arrivée du paquet de réponse associé, marqué par le bloc cible, sur l'un des liens de réponse de cet initiateur. La deuxième unité sert à compter le nombre de paquets marqués reçus sur l'un des liens de réponse de ce même initiateur.

Les compteurs des deux unités de sondage assurent l'un un comptage de cycles d'horloge et l'autre un comptage des paquets marqués à partir de ces évènements.

Ainsi, lors d'un transfert d'informations entre une unité de sondage et les moyens de contrôle 10, on transfère le nombre de cycles accumulés et le nombre de paquets correspondants, à un demi paquet près. Les moyens de contrôle 10 sont alors en mesure d'élaborer une caractéristique de latence par calcul du rapport entre, d'une part, le nombre de cycles d'horloge total accumulé pendant le transfert des paquets marqués, et d'autre part, le nombre de paquets marqués véhiculés au cours desdits cycles d'horloge, à un demi près.

Comme précédemment indiqué, les moyens de contrôle 10 sont destinés à récolter les informations détectées par les unités de sondage 16, 18, de chaque module de sondage Mi.

Ils comportent à cet effet des compteurs globaux, tels que 34, de capacité plus grande que celle des compteurs 26 des unités de sondage. Ces compteurs 34 sont associés à un ou deux registres de configuration 36 pour indiquer, pour chaque compteur global 34, la boucle et les unités de sondage dont il convient de récupérer les informations. Grâce à l'accès séquentiel des unités de sondage, on repère, dans les paquets qui circulent dans les liens 28 des boucles, les positions qui correspondent aux positions et aux boucles configurées dans les registres de configuration 36 associés à chacun des registres globaux afin d'accumuler l'information dans ces derniers. On notera cependant que seules quelques unités de sondage sont en observation à la fois afin de limiter les coûts. On se limitera également au cas où les unités observées sont consécutives, ce qui permet de spécifier l'ensemble des unités en indiquant uniquement la première et la dernière.

Les résultats des compteurs globaux peuvent être utilisés pour constituer une trace des performances du réseau d'interconnexion. Comme indiqué précédemment, on utilise pour ce faire une interface parallèle 12 de communication avec l'extérieur (figure 1). On notera que les données sont généralement transférées sur un domaine d'horloge externe, de sorte que l'on utilisera une mémoire asynchrone de type FIFO à deux horloges, telle que précédemment décrite afin d'adapter le flux d'informations.

Comme la mémoire externe est de taille finie, une fois qu'elle a été remplie, les plus anciennes données sont écrasées par les nouvelles. Les résultats sont alors exploités en arrêtant la mémorisation sous le contrôle de moyens de déclenchement (non représentés) qui, tout comme les compteurs globaux, observent des éléments en provenance d'une ou plusieurs unités de sondage. La mémorisation peut être arrêtée soit pour visualiser la trace enregistrée avant le déclenchement afin d'analyser les conditions amenant audit déclenchement, soit juste après le déclenchement pour analyser le comportement du système après l'évènement déclenchant.

Par exemple, les moyens de déclenchement comprennent un dispositif de mesure pour mesurer un pseudo-débit d'évènements sur une période donnée. Un compte d'évènements est accumulé dans le dispositif à partir des messages reçus des unités de sondage et, à chaque cycle de l'horloge cadençant les moyens de contrôle 10, on retire une quantité fixe configurable. Lorsque la quantité ainsi accumulée dépasse un seuil, la valeur de ce seuil étant elle-même configurable, ceci déclenche l'arrêt la mémorisation de la trace. Ainsi, ce qui déclenche le dispositif est un nombre d'évènements donnés sur une fenêtre glissante de durée déterminée.

Lorsque l'évènement déclenchant est une latence, dans la mesure où la détermination de la latence met en oeuvre deux comptes, on utilise un premier compte de cycles d'horloge, comptés en cycle de l'horloge locale à l'unité de sondage, et un deuxième compte qui est un compte de paquets marqués. Le dispositif de déclenchement va alors accumuler les cycles d'horloge et retire une quantité fixe un nombre de fois égal au nombre de paquets comptabilisés, c'est-à-dire que l'on retire une quantité fixe configurable et l'on décrémente simultanément le compte de paquets tant que le compte de paquets n'est pas nul. On surveille donc ainsi que les cycles perdus de latence ne dépassent pas une valeur donnée sur une fenêtre glissante d'une durée déterminée.

## Revendications

1. Système de détermination des performances d'un réseau d'interconnexion de blocs fonctionnels d'un circuit intégré spécialisé, **caractérisé en ce qu'**il comporte un ensemble de modules de sondage (M1, M2, M3) disposés sur le réseau et comprenant au moins une unité de sondage (16, 18) comprenant des moyens pour détecter un évènement sur au moins un lien (L1, L2, ..., LN) de communication du réseau et des moyens pour élaborer une caractéristique traduisant l'activité dudit au moins un lien à partir de la détection dudit évènement.

2. Système selon la revendication 1, **caractérisé en ce que** les moyens pour élaborer ladite caractéristique comprennent des moyens de comptage (26) pour compter le nombre d'évènements détectés.

3. Système selon l'une des revendications 1 et 2, **caractérisé en ce que** les moyens pour élaborer ladite caractéristique comprennent des moyens de comptage (26) pour compter un nombre de cycles d'horloge entre deux évènements détectés.

4. Système selon l'une quelconque des revendications 1 à 3, **caractérisé en ce que** les modules de sondage (M1, M2, M3) sont disposés sous la forme d'une chaîne de modules ordonnés et **en ce que** des messages de contrôle du fonctionnement du système sont transmis aux unités de sondage sous la forme de trames de mots dont la position, dans la trame, correspond à la position, dans la chaîne, de ladite unité de sondage (16, 18) à laquelle chaque mot est destiné.

5. Système selon la revendication 4, **caractérisé en ce que** chaque module de sondage comporte un compteur (32) pour décompter les mots successivement reçus pour déterminer le destinataire desdits mots.

6. Système selon l'une des revendications 4 et 5, **caractérisé en ce que** chaque module de sondage comporte des moyens de décodage (30) pour le décodage d'un premier mot de la trame indiquant le type d'informations contenues dans la trame.

7. Système selon l'une quelconque des revendications 1 à 6, **caractérisé en ce qu'**il comporte en outre un module de contrôle (10) comprenant des compteurs globaux (34) vers lesquels sont transférées des valeurs de comptage des moyens de comptage.

8. Système selon la revendication 7, **caractérisé en ce que** le module de contrôle comporte un ou plusieurs registres de configuration (36) servant à indiquer la chaîne de modules et la position, dans ladite chaîne, du module de sondage dont proviennent les valeurs de comptage.

9. Système selon l'une quelconque des revendications 1 à 8, **caractérisé en ce que** chaque unité de sondage comporte un registre de configuration (24) commandant un sélecteur (20) pour la sélection d'un lien de communication parmi une pluralité de liens auxquels il est raccordé et la sélection d'un évènement détecté, et un module de détection (22) assurant la détection sur ledit lien de l'évènement sélectionné.

10. Système selon l'une quelconque des revendications 1 à 9, **caractérisé en ce que** les unités de sondage (16, 18) sont chacune prévues sur une interface d'un bloc fonctionnel du circuit intégré spécialisé.

11. Système selon l'une quelconque des revendications 1 à 10, **caractérisé en ce que** les modules de sondage étant disposés dans des parties du réseau cadencées selon des horloges différentes, il comporte des moyens de mémorisation asynchrones de type FIFO assurant une adaptation des flux de données véhiculées entre les parties de réseau.

12. Système selon l'une quelconque des revendications 1 à 11, **caractérisé en ce qu'**il comporte des moyens de marquage des paquets de données véhiculées entre un bloc fonctionnel initiateur d'un message vers un bloc cible et entre un bloc cible et un bloc initiateur.

13. Système selon la revendication 12, **caractérisé en ce qu'**il comporte des moyens (10) de détection de latence à partir d'une détection de paquets de mots marqués véhiculés sur un lien de requête entre un bloc initiateur et un bloc cible et d'une détection de paquets marqués, en retour, sur un lien de réponse entre ledit bloc cible et ledit bloc initiateur.

14. Système selon la revendication 13, **caractérisé en ce que** les moyens de détection de latence comprennent une première unité de sondage d'un module de détection, comprenant des moyens de comptage qui sont dédiés au comptage de cycles d'horloge et qui sont démarrés après détection d'un paquet marqué dans une trame émise par le bloc initiateur vers le bloc cible et arrêtés après détection d'un paquet marqué dans une trame reçue par le bloc initiateur en provenance du bloc cible et une deuxième unité de sondage dudit module (Mi) dédiée au comptage de paquets marqués transmis.

15. Système selon l'une quelconque des revendications 7 à 14, **caractérisé en ce qu'**il comporte des moyens pour transférer une partie au moins de la valeur de comptage des compteurs globaux (34) vers une mémoire externe, et des moyens de déclenchement pour contrôler le transfert de ladite valeur de comptage.

16. Procédé de détermination des performances d'un réseau d'interconnexion de blocs fonctionnels d'un circuit intégré spécialisé, **caractérisé en ce qu'**il comporte les étapes de :
- détection d'un évènement sur au moins un lien de communication du réseau d'interconnexion ; et
- élaboration d'une caractéristique traduisant l'activité dudit au moins un lien à partir de la détection dudit évènement.

17. Procédé selon la revendication 16, **caractérisé en ce que** l'on compte le nombre d'évènements détectés.

18. Procédé selon l'une des revendications 16 et 17, **caractérisé en ce que** l'on compte un nombre de cycles d'horloge entre deux évènements détectés.

19. Procédé selon l'une quelconque des revendications 16 à 18, **caractérisé en ce que** préalablement à la détection des évènements, on configure un ensemble de modules de sondage qui sont disposées sur des liens de communication du réseau sous la forme d'une chaîne de modules ordonnés et qui comprennent au moins une unité de sondage, au moyen de messages de contrôle du fonctionnement du système transmis auxdites unités sous la forme de trames de mots dont la position, dans chaque trame, correspond à la position d'une unité de sondage dans la chaîne auquel le mot est destiné, et dont la largeur correspond à la largeur des liens de communication.

20. Procédé selon la revendication 19, **caractérisé en ce que** l'on émet, dans les messages de contrôle, un premier mot de codage du type d'information contenues dans le message.

21. Procédé selon l'une quelconque des revendications 16 à 20, **caractérisé en ce que** lors d'un échange d'informations entre un bloc fonctionnel initiateur et un bloc fonctionnel cible, on marque des paquets de données émis par le bloc initiateur vers le bloc cible, on marque des paquets de données émis en réponse par le bloc cible vers le bloc initiateur, on compte le nombre de cycles d'horloge entre l'émission des paquets marqués par le bloc initiateur et la réception des paquets marqués émis par le bloc cible, et l'on compte le nombre de paquets marqués transmis.

22. Procédé selon l'une quelconque des revendications 17 à 21, **caractérisé en ce que** l'on transfère des valeurs de comptage résultant du comptage des évènements détectés et/ou du nombre de cycles d'horloge vers des compteurs globaux.

23. Procédé selon la revendication 22, **caractérisé en ce que** l'on accumule des valeurs successives issues d'une ou de plusieurs unités de sondage, on retire une quantité fixe configurable à chaque cycle d'horloge cadençant un moyen de contrôle (10) et l'on provoque le transfert des données quand la valeur accumulée dépasse une valeur de seuil configurable.

24. Procédé selon la revendication 22, **caractérisé en ce que** l'on accumule des valeurs successives issues d'une première unité de sondage, on retire une quantité fixe configurable un nombre de fois égale à une valeur issue d'une deuxième unité de sondage et l'on génère un signal de déclenchement du transfert quand la valeur accumulée dépasse une valeur de seuil prédéterminée configurable.
